(19) **Europäisches Patentamt**
**European Patent Office**
**Office européen des brevets**

(11) **EP 2 560 024 B1**

(12) **EUROPEAN PATENT SPECIFICATION**

(45) Date of publication and mention
of the grant of the patent:
**31.05.2017 Bulletin 2017/22**

(51) Int Cl.:
**G01S 19/42** *(2010.01)*    *G01S 19/28* *(2010.01)*

(21) Application number: **11189034.9**

(22) Date of filing: **14.11.2011**

(54) **Satellite-based positioning method**

Satellitenbasiertes Standortbestimmungsverfahren

Procédé de positionnement à base de satellite

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.08.2011  CN 201110245162**

(43) Date of publication of application:
**20.02.2013  Bulletin 2013/08**

(73) Proprietor: **Getac Technology Corporation
Taipei City 11568 (TW)**

(72) Inventor: **Chiu, Shang-Ming
Taipei City 11568 (TW)**

(74) Representative: **Schmidt, Axel
nospat Patent- und Rechtsanwälte GbR
Isartorplatz 5
80331 München (DE)**

(56) References cited:
**US-A1- 2002 027 525    US-A1- 2003 231 132
US-A1- 2005 195 107    US-A1- 2006 038 717
US-A1- 2011 080 318**

Printed by Jouve, 75001 PARIS (FR)

## Description

## BACKGROUND

## Field of the invention

The disclosure relates to a satellite-based positioning method, and more particularly to a satellite-based positioning method for improving the positioning accuracy.

## Related Art

The Global Positioning System (GPS) is a global spaced-based positioning system developed by the United States Department of Defense, which is initially used in military applications, for example, military aircraft navigation and missile remote control. However, the current application of the GPS has gradually entered the daily life of each person. For example, vehicle navigation with an electronic map enables a driver to reach a destination easily. Or, in leisure activities, a hiker or mountain-climber can find the destination and the way home by using the GPS function.

The GPS continuously sends satellite signals containing satellite location information through twenty four artificial satellites distributed in the six orbital planes around the Earth. Moreover, ground control stations are disposed in various places globally to manage operation and correction of the satellite system. A user uses a GPS receiver to receive the satellite signals and obtain information of the user's position. After the GPS receiver receives the satellite signals, computation is performed by a microprocessor system. The Orientation coordinate of the user are calculated through delays of signals transmitted by different satellites by using the triangulation. The strength of the received signals directly affects the positioning accuracy.

The Wide Area Augmentation System (WAAS) or the Assisted Global Positioning System (AGPS) have been developed to improve the positioning accuracy by correcting satellite ephemeris or almanac data. However, areas covered by a WAAS service are limited, so it is difficult to obtain a true corrected position. Once an AGPS service is away from service stations, the correction capability of the AGPS service is degraded. Otherwise, if a shelter exists in the environment, the correction provided by the WAAS and the AGPS both deteriorate.

## SUMMARY

According to an embodiment, a satellite-based positioning method comprises: obtaining multiple satellites in use by searching; calculating every satellite vector between each of the satellites in use and a GPS receiver; searching for three of the satellites in use forming a geometric error relation according to the satellite vectors, and taking at least one of the three satellites in use forming the geometric error relation as a first satellite; searching for at least one second satellite in the satellites in use, where a signal strength varied rate of the second satellite is greater than a varied rate threshold; and using the satellites in use other than the first satellite and the second satellite removed to perform positioning.

According to another embodiment, a satellite-based positioning method comprises: obtaining multiple satellites in use by searching; calculating a satellite vector between each of the satellites in use and a GPS receiver; searching for three of the satellites in use forming a geometric error relation according to the satellite vectors, and using at least one of the three satellites in use forming the geometric error relation as a first satellite; searching for at least one second satellite in the satellites in use, where a signal strength varied rate of the second satellite is greater than a varied rate threshold; calculating a deviation of current positioning; and when the deviation of current positioning is greater than a deviation threshold, using the satellites in use other than the first satellite or the second satellite removed to perform positioning.

## BRIEF DESCRIPTION OF THE DRAWINGS

The disclosure will become more fully understood from the detailed description given herein below for illustration only, and thus are not limitative of the disclosure, and wherein:

FIG. 1 is a flow chart of a satellite-based positioning method according to an embodiment;

FIG. 2 is a flow chart of Step S100 according to an embodiment;

FIG. 3 is a schematic view of satellites in use and satellites in-view according to an embodiment;

FIG. 4 is a schematic view of a geometric error relation according to an embodiment;

FIG. 5 is a flow chart of Step S500 according to an embodiment;

FIG. 6 is a flow chart of Step S500 according to an embodiment;

FIG. 7 is a flow chart of a satellite-based positioning method according to an embodiment;

FIG. 8 is a schematic view of the signal strength and a deviation according to an embodiment;

FIG. 9 is a schematic view of the signal strength and a deviation according to an embodiment;

FIG. 10 is a schematic view of a signal strength varied rate, an elevation angle, and a deviation according to an embodiment;

FIG. 11 is a schematic view of a fixed strength mask value and a deviation according to an embodiment;

FIG. 12 is a schematic view of an adjusted strength mask value and a deviation according to an embodiment; and

FIG. 13 is a schematic comparison view of deviations according to an embodiment.

## DETAILED DESCRIPTION

The detailed features and advantages of the disclosure are described below in great detail through the following embodiments, the content of the detailed description is sufficient for persons skilled in the art to understand the technical content of the disclosure and to implement the disclosure there accordingly. Based upon the content of the specification, the claims, and the drawings, persons skilled in the art can easily understand the relevant objectives and advantages of the disclosure.

The disclosure relates to a satellite-based positioning method, which is applicable in a GPS receiver and can provide high-accuracy satellite-based positioning services. The GPS receiver may be configured in mobile electronic devices, such as mobile phones, personal digital assistants (PDA), or notebook computers, and may also be configured in vehicles such as automobiles to provide satellite-based positioning services.

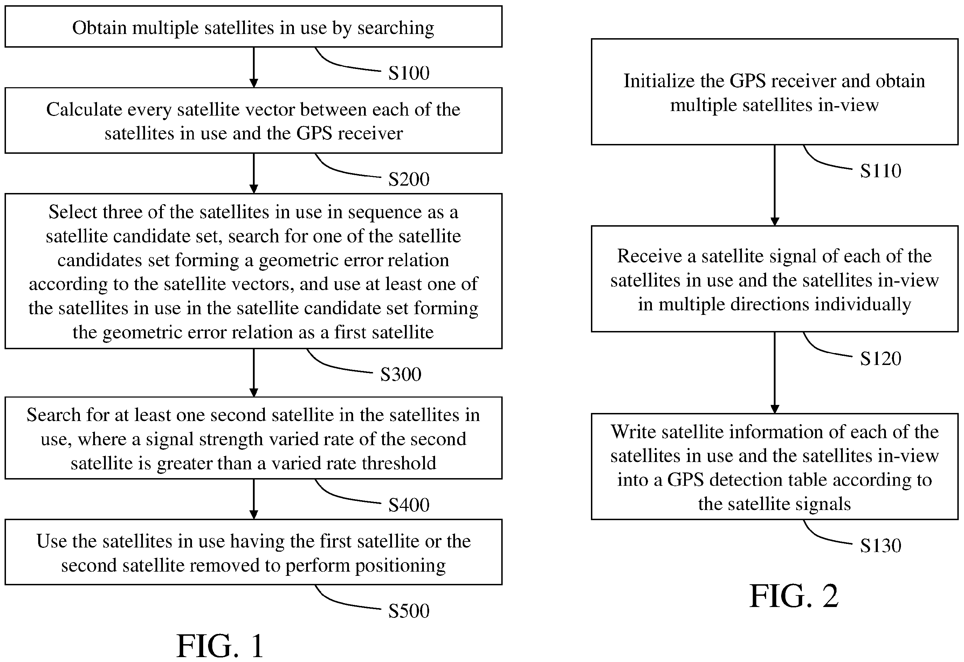

FIG. 1 is a flow chart of a satellite-based positioning method according to an embodiment. As shown in FIG. 1, in order to obtain satellites capable of being used to perform accurate positioning, multiple satellites in use are obtained initially by searching (Step S100). Except the purpose of searching for the satellites in use, , Step S100 may comprise the steps as shown in FIG. 2 used for finding out an environment where the GPS receiver is located and a possible effect on positioning.

FIG. 2 is a flow chart of Step S100 according to an embodiment. A GPS receiver may first be initialized, and obtain multiple satellites in-view according to a built-in satellite ephemeris or a built-in satellite almanac data received from a nearby mobile phone base station (Step S110). The satellites in-view comprise all of the satellites in use. The GPS receiver may receive a satellite signal of each of the satellites in use and the satellites in-view in multiple directions individually (Step S120).

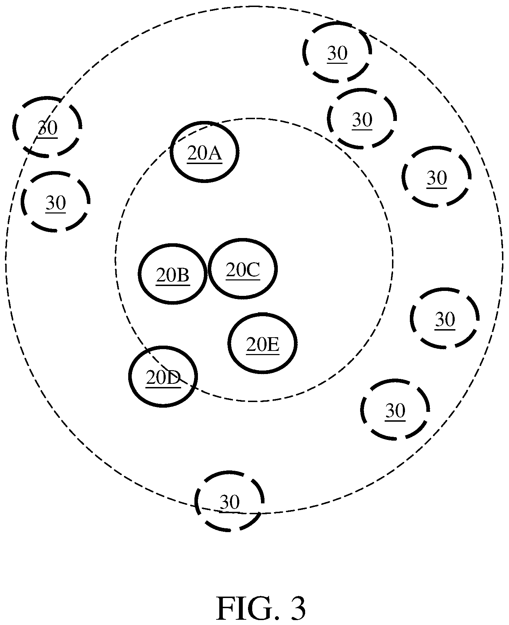

FIG. 3 is a schematic view of satellites in use and satellites in-view according to an embodiment of the disclosure.

In the embodiment as shown in FIG. 3, according to the satellite-based positioning method, the satellites in-view 30 and the satellites in use 20A to 20E (which are collectively referred to as satellites in use 20 hereinafter) are obtained. According to the satellite-based positioning method, all GPS artificial satellites with satellite signals capable of being received by the GPS receiver may first be chosen as satellites in-view 30, and then some of the satellites in-view 30 having better reception intensity are chosen as satellites 20 in use. In some embodiments, the satellites in-view 30 may all be set as the satellites in use 20. Alternatively, in some embodiments, a part of the satellites in-view 30 are not chosen as the satellites in use 20, and such satellites in-view 30 not chosen are also referred to as tracking satellites used as spares.

A calculation for finding the position may be regarded as solving a ternary linear equation having three variables (X, Y, Z), so at least three satellite signals are required to be used as known data. In other words, according to the satellite-based positioning method, only three satellites need to be found and used as the satellites in use 20, and, then, the longitude and latitude coordinates of the location can be calculated. When four satellites in use 20 are used, a time error that occurs when the satellite signals are received can be eliminated. Normally, the GPS receiver keeps receiving signals from four satellites in use 20 at anytime. Furthermore, in Step S100, the GPS receiver may perform preliminary satellite-based positioning, and obtains a preliminary position. The preliminary position refers to the location of the GPS receiver obtained through preliminarily calculation before the GPS receiver performs subsequent Step S200 to Step S500.

According to the satellite ephemeris data, which is also referred to as almanac data, and the received satellite signals, the GPS receiver can obtain satellite information of each of the satellites. According to the received satellite signals, the satellite information of each of the satellites in use 20 and the satellites in-view 30 is written into a GPS detection table, for performing the positioning in the following. Each piece of satellite information may comprise a signal strength value, a satellite altitude value, an azimuth angle, and an elevation angle of the satellite in use 20 or the satellite in-view 30. The carrier-to-noise ratio (CNR) of the satellite signal may be used as the signal strength value.

In addition, in order to obtain an accurate location as soon as possible, initial positioning information may be obtained according to a vector relation to a satellite-based augmentation system (SBAS) mask value. Besides, after the GPS receiver is restarted, the initial positioning information may be directly obtained by the SBAS.

After the satellite information possibly needed is obtained in Step S100, according to the satellite-based positioning method, a satellite vector between each of the satellites in use 20 and the GPS receiver is calculated (Step S200). Specifically, several three-dimensional (3D) vectors, with the GPS receiver as a starting point and each of the satellites in use 20 as an ending point, may be calculated and used as the satellite vectors.

According to the above-mentioned satellite vectors and satellite information, in the satellite-based positioning method, at least one of the satellites that may decrease the positioning accuracy is found to be excluded in Step S300 and Step S400 as follows.

Three of the satellites in use 20 are selected in sequence as a satellite candidate set, one of the satellite candidate sets forming a geometric error relation is searched for according to the satellite vectors, and at least one of the satellites in use 20 in the satellite candidate set forming the geometric error relation is defined as a first satellite (Step S300).

The locations of the three satellites in use 20 are calculated by solving the ternary linear equation having the three variables (X, Y, Z) and a triangle is formed by the three locations of the three satellites in use 20. The obtaining the location by solving the ternary linear equation is geometrically similar to obtaining the coordinate of the center of gravity of the triangle. Therefore, the optimal situation is that the three satellites in use 20 used for the solution geometrically form a regular triangle Therefore, in this way, even if the content of any one of the satellite signals is inaccurate, the influence on calculated solutions is slighter, and a calculation error (that is, a geometric error) is not likely to be caused.

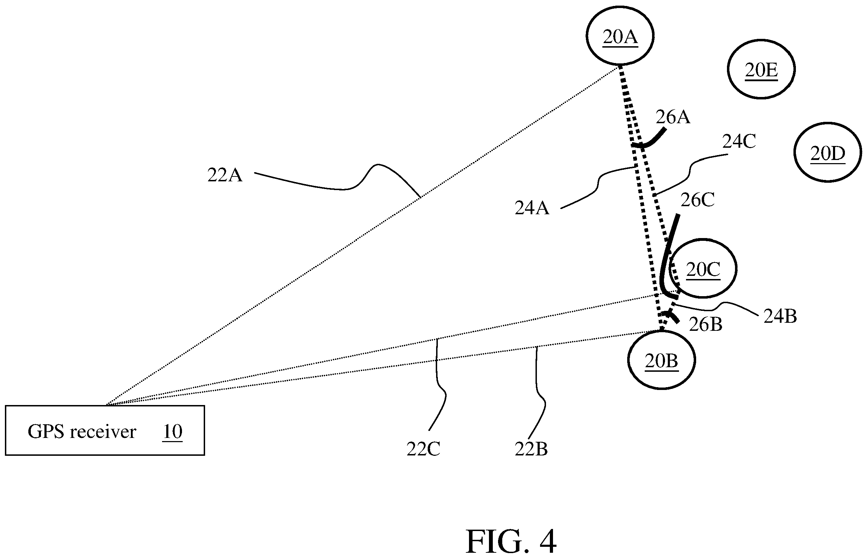

FIG. 4 is a schematic view of a geometric error relation according to an embodiment. However, in the embodiment in FIG. 4, the satellites in use 20A, 20B, and 20C form a triangle with a sharp angle.

In terms of obtaining the coordinate of the center of gravity of the sharp triangle, an error is likely to occur on an axis connecting the satellite in use 20A to a midpoint of the satellites in use 20B and 20C. Therefore, when the three satellites in use 20A, 20B, and 20C are used to calculate the position, a geometric error is likely to occur, and the three satellites in use 20A, 20B, and 20C form a geometric error relation.

In an embodiment, in order to determine whether any three of the satellites in use 20 forms the geometric error relation, three of the satellites in use 20 may be selected in sequence as a satellite candidate set first. For example, in the embodiment in FIG. 4, the satellites in use 20A, 20B, and 20C are selected as a satellite candidate set first, and then the satellites in use 20A, 20B, and 20D or the satellites in use 20A, 20B, and 20E are selected as a satellite candidate set.

Taking the satellite candidate set of the satellites in use 20A, 20B, and 20C as an example, subtraction is performed on any two of satellite vectors 22A, 22B, and 22C to obtain three vectors between the satellites 24A, 24B, and 24C (which are collectively referred to as vectors 24 between satellites hereinafter). According to the vectors between the satellites 24, three angles between the satellites 26A, 26B, and 26C (which are collectively referred to as angles between satellites 26 hereinafter) can be obtained by using the formula

$$\cos\theta = \frac{V_1 \bullet V_2}{\left\|\sqrt{V_1}\right\|\left\|\sqrt{V_2}\right\|}$$ · In Step S300, all triangles formed by the satellites in use 20 can be found, each of the angles between the satellites 26 is calculated one after another, and it is determined whether any one of the angles between the satellites 26 is smaller than a threshold angle by searching and checking.

When an angle between the satellites (for example the angle between the satellites 26A) is smaller than the threshold angle, the satellite candidate set having the angle smaller than the threshold angle is considered as the three satellites in use 20 forming the geometric error relation, and at least one of the three satellites in use 20A, 20B, and 20C forming the geometric error relation is classified as the first satellite. For example, a satellite in use 20 with the weakest signal strength or the smallest elevation angle in the satellite candidate set may be classified as the first satellite. For example, in Step S300, the satellite in use 20B may be set as the first satellite.

In another embodiment, after three of the satellites in use 20 are selected in sequence as the satellite candidate set, an azimuth angle θi between each of satellites in use i in the satellite candidate set and the GPS receiver is calculated one by one according to the satellite vectors. When an azimuth angle θj of any one of other obtained satellites in use j of the satellite candidate set is smaller than (θi+π/2) or greater than or equal to (θBi-π/2), the satellite candidate set having the satellite in use j with the azimuth angle θj smaller than (θi+π/2) or greater than or equal to (θi-π/2) is used as the satellite candidate set forming the geometric error relation, and the satellite in use j having the azimuth angle θj smaller than (θi+π/2) or greater than or equal to (θi-π/2) is classified as the first satellite.

According to the satellite-based positioning method, at least one second satellite among the satellites in use is searched for. A signal strength varied rate of the second satellite is greater than a varied rate threshold (Step S400). The signal strength varied rate may be 0.2 decibel/second (dB/sec), but is not limited to the abovementioned rate. Normally, when a shelter exists in the environment around the GPS receiver 10, the signal strength varied rate is likely to be increased. A large signal strength varied rate is likely to cause errors in signal interpretation, and, thereby, resulting in inaccurate positioning, so the satellite in use 20 with the large signal strength varied rate is practically not suitable for positioning. In other words, the satellites in use 20 having the problem of sheltering can be found in Step S400.

The signal reception model, a correction orientation, and a correction signal strength of the GPS receiver 10 in Step S100 may be used in Step S300 and Step S400. For example, when an antenna of the GPS receiver 10 is directed to the south, the satellite signal received from any other satellites is attenuated by at least 10 dB. Before the signal strength varied rate is calculated, the signal strength of each of the satellite signals received when the antenna is directed to the correction orientation is added with the correction signal strength. Thus, the situation that poor signal reception resulted from the GPS receiver 10 or the environment is incorrectly ascribed to the current satellites in use 20 and the suitable satellite in use 20 is incorrectly considered as the first satellite or the second satellite can be avoided.

Furthermore, in some embodiments, the execution order of Step S300 and the Step S400 may be changed, and, in some embodiments, only one of the first satellite and the second satellite is found.

After the first satellite or the second satellite not suitable for positioning is found and the satellite information of the first satellite and the second satellite is recorded in Step S300 and Step S400, the satellites in use 20 having the first satellite or the second satellite removed are used to perform positioning (Step S500). It is assumed that in the embodiments in FIG. 3 and FIG. 4, the satellite in use 20B is determined as the first satellite and the satellite in use 20D is determined as the second satellite. According to the satellite-based positioning method, only the satellites in use 20A, 20C, and 20E are used for positioning in Step S500.

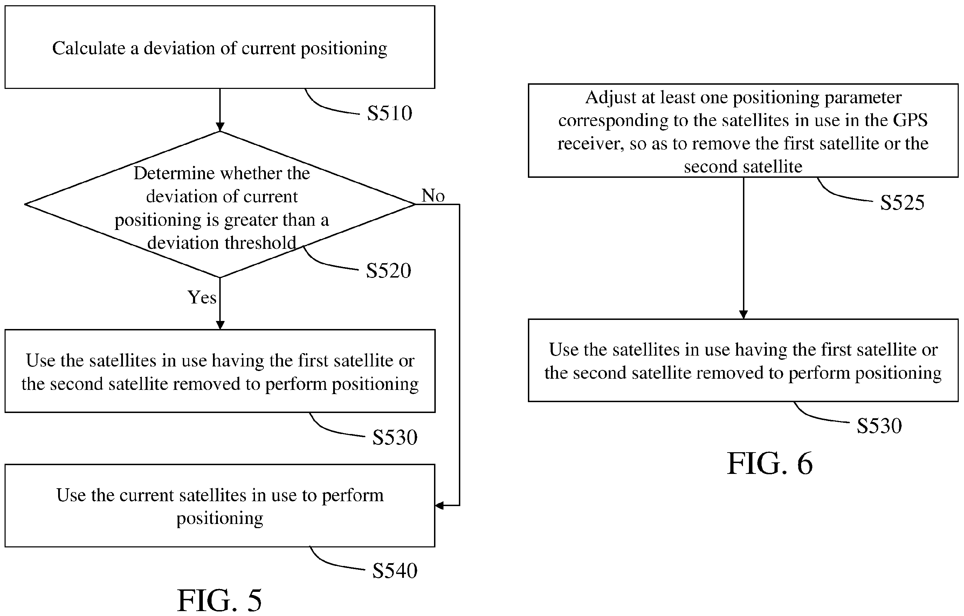

Step S500 may comprise steps as shown in FIG. 5 or FIG. 6.

In order to determine the positioning accuracy, a deviation of current positioning is calculated first (Step S510), and whether the deviation of current positioning is greater than a deviation threshold is determined (Step S520). After Step S100 where the preliminary position is obtained, according to the satellite-based positioning method, the same satellites in use 20 can be continuously used to perform positioning, and a difference between each positioning result and the actual location is recorded as a deviation variable. In Step S510, according to the satellite-based positioning method, a variation coefficient (CV) or a two-dimensional root-mean-square (2DRMS) deviation of the deviation variable to the current moment can be calculated as the deviation of current positioning. When the deviation of current positioning is greater than the deviation threshold, it indicates that the original positioning method cannot meet the desired accuracy requirements, so the satellites in use 20 having the first satellite or the second satellite removed are used to perform positioning (Step S530). On the contrary, if the deviation of current positioning is smaller than the deviation threshold, the current satellites in use 20 can be continuously used for performing positioning (Step S540).

The deviation threshold may be a default value or a value set by a user. For example, the user may set the desired accuracy to be two meters or one meter. If the positioning by the current satellites in use 20 cannot meet the requirement, Step S530 needs to be performed to obtain a more accurate positioning result. In other words, various convergence conditions in the satellite-based positioning method may be built or defined by the user so as to make the satellite-based positioning method meet demands of the user in different signal reception models.

Before Step S530, according to the satellite-based positioning method, at least one positioning parameter corresponding to the satellites in use 20 in the GPS receiver may be adjusted, so as to remove the first satellite or the second satellite (Step S525).

According to an embodiment, the positioning parameter may comprise a strength mask value, and it is defined that only the signal strength of the satellite greater than the strength mask value can be used as the satellite in use 20. In Step S525, when the first satellite or the second satellite is the satellite in use 20 having the lowest signal strength value, the strength mask value may be increased to remove the satellite in use 20 having the lowest signal strength value. For example, among all of the satellites in use 20, the current signal strength value of the satellite in use 20D set as the second satellite is the lowest and is 25 dB. According to the satellite-based positioning method, the strength mask value may be slightly increased to 30 dB to remove the satellite in use 20D and make the satellite in use 20D become a tracking satellite.

According to another embodiment, the positioning parameter may comprise an elevation angle mask value, and it is defined that only the satellite with the elevation angle greater than the elevation angle mask value can be classified as the satellite in use 20. In Step S525, when the first satellite or the second satellite is the satellite in use 20 having the lowest signal strength, the elevation angle mask value may be increased gradually at an elevation angle spacing, until the satellite in use 20 having the smallest elevation angle is removed. For example, among all of the satellites in use 20, the current elevation angle of the satellite in use 20B set as the second satellite is the smallest and is 10 degree. According to the satellite-based positioning method, the elevation angle mask value exerts greater influence, so the elevation angle mask value is gradually increased by 0.5 degree of the elevation angle spacing until the satellite in use 20B is removed.

In addition to the above-mentioned strength mask value and the elevation angle mask value, the positioning parameters in the satellite-based positioning method, such as GPS firmware parameters, an including power value, and the SBAS mask value may be further adjusted, so as to obtain a more accurate positioning result.

In addition, in Step S520, besides determining whether the deviation of current positioning is greater than the deviation threshold, other conditions may also be considered and determined.

According to an embodiment, only when the deviation of current positioning is greater than the deviation of previous positioning and the deviation of current positioning is greater than the deviation threshold, Step S525 and Step S530 are performed. The deviation of previous positioning may also be obtained by calculating the CV or the 2DRMS deviation. When the deviation of current positioning is greater than the deviation of previous positioning and the deviation threshold, it indicates that the current satellite-based positioning ability deteriorates. Therefore, according to the satellite-based positioning method, the satellites in use 20 having the first satellite or the second satellite removed are used to perform positioning, so as to improve the positioning accuracy.

According to another embodiment, in the satellite-based positioning method, the Taylor expansion may be applied to obtain a changing trend of the positioning accuracy and calculate a pre-estimated deviation of positioning. Only when the deviation of current positioning is greater than both the pre-estimated deviation of positioning obtained by previous estimation and the deviation threshold, the satellites in use 20 having the first satellite or the second satellite removed are used for positioning.

Besides being applied to calculate the pre-estimated deviation of positioning, the Taylor expansion may also be applied to calculate a pre-estimated position according to the preliminary position obtained by the previous positioning. Furthermore, if it is found that the position obtained by the positioning or the deviation variable are far different from the pre-estimated results, it indicates that the satellite signals received at this time may not be suitable for use and need to be abandoned. The GPS satellite normally sends a satellite signal every 1/20 second, but the GPS receiver may provide the position to a device equipped with the GPS receiver every several seconds (for example 5 seconds) due to limitations of a receiving chip of the GPS receiver. Therefore, even when some satellite signals are too poor to be retained, the subsequent satellite signals of the satellite-based positioning method can be continuously received, and the location is provided within a time period for updating.

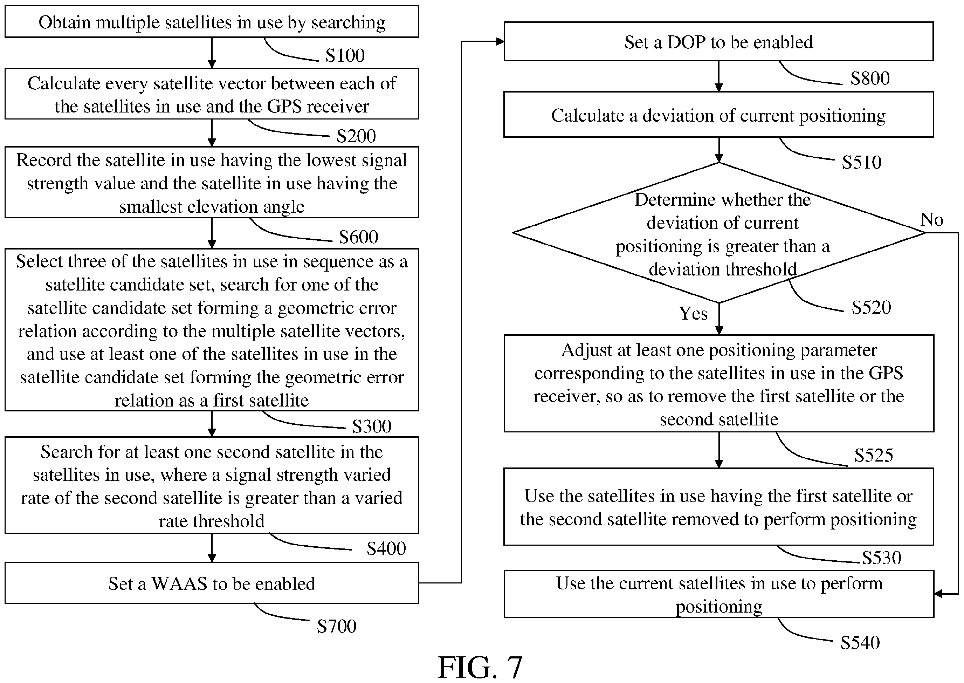

FIG. 7 is a flow chart of a satellite-based positioning method according to an embodiment.

As shown in FIG. 7, before the positioning parameter is adjusted, according to the satellite-based positioning method, the satellite in use 20 having the lowest signal strength value and the satellite in use 20 having the smallest elevation angle are further recorded (Step S600). In fact, Step S600 may be performed between Step S100 and Step S525. When Step S525 is performed, it may be determined whether the first satellite or the second satellite and the satellites in use 20 recorded in Step S600 are the same satellite, and then, the strength mask value or the elevation angle mask value is adjusted to exclude the first satellite and the second satellite in the satellites in use 20.

For example, in Step S600, when the satellite in use 20D is first recorded that the satellite in use 20D has the lowest signal strength value, and then in Step S400, the satellite in use 20D is classified as the second satellite. In Step S525, only the strength mask value needs to be adjusted to be slightly greater than the signal strength value of the satellite in use 20D, so as to remove the satellite in use 20D from all of the satellites in use 20. Thus, parameter needs to be adjusted can be properly judged, and the satellites in use 20 other than the first satellite and the second satellite are prevented from being removed.

In order to improve the positioning accuracy, if the GPS receiver is in a country that a WAAS signal can be received, a WAAS parameter is set to be enabled (Step S700). The satellite-based positioning system may also set a Dilution of Precision (DOP) to be enabled (Step S5800). Similarly, the satellite-based positioning method may also enable other functions capable of assisting positioning, such as geometric dilution of precision (GDOP). The step of enabling the WAAS or DGOP and the step of adjusting the positioning parameters may be performed simultaneously.

According to an embodiment, the satellite-based positioning method includes calculating the satellite vector between each of the satellites in-view 30 and the GPS receiver, and searching for the first satellite or the second satellite in the tracking satellites. After the first satellite or the second satellite is removed, it may happen that the number of the remaining satellites in use 20 is less than three. In this case, at least one tracking satellite having better signal strength or a larger elevation angle is searched in all of the tracking satellites, and at least one positioning parameter is adjusted to add the at least one better tracking satellite to the satellite in use 20. In Step S530, the satellites in use 20 having the first satellite or the second satellite removed and the tracking satellite newly added can be used to perform positioning.

However, before the addition of the tracking satellite, it may first be determined whether the newly added tracking satellite satisfies the requirements of being the first satellite or the second satellite. If the tracking satellite is added, but becomes the first satellite or the second satellite, the tracking satellite is not suitable for being added to the satellites in use 20. In Step S300 and Step S400, according to the satellite-based positioning method, all the satellites in-view 30 may also be searched for the first satellite or the second satellite directly, so as to determine whether there is a satellite not suitable for positioning in the satellites in use 20 or the tacking satellites.

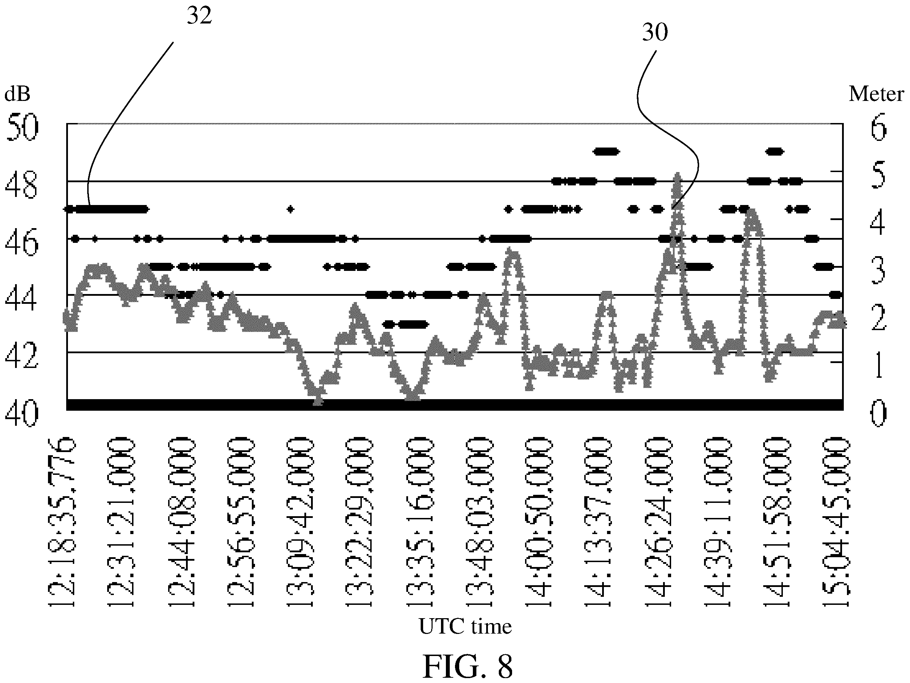

In the following, referring to FIG. 8 to FIG. 13, data examples of the satellite-based positioning method are shown below.

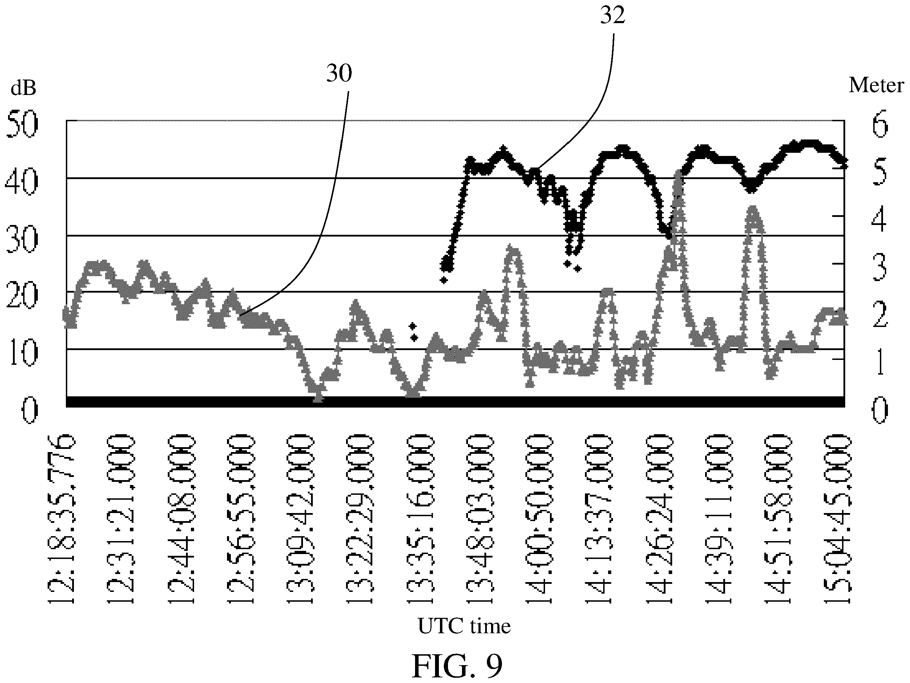

FIG. 8 is a schematic view of the signal strength and a deviation according to an embodiment. FIG. 9 is a schematic view of the signal strength and a deviation according to an embodiment. In FIG. 8 and FIG. 9, the unit of the left side of the vertical axis is decibel (dB), and the unit of the right side of the vertical axis is meter. FIG. 8 and FIG. 9 respectively illustrate a signal strength curve 32 of satellite signals received from different satellites in use 20 and an incurred deviation curve 31. The deviation curve 31 corresponds to the right side of the vertical axis and the signal strength curve 32 corresponds to the left side of the vertical axis. It can be seen from FIG. 8 that, approximately at Coordinated Universal Time (UTC) time 14:29:17, the deviation of positioning is obviously influenced due to the decreasing of the signal strength. Similarly, in FIG. 9, approximately at UTC time 14:06:07 and 14:53:55, the deviation is increased dramatically due to the decreasing of the signal strength.

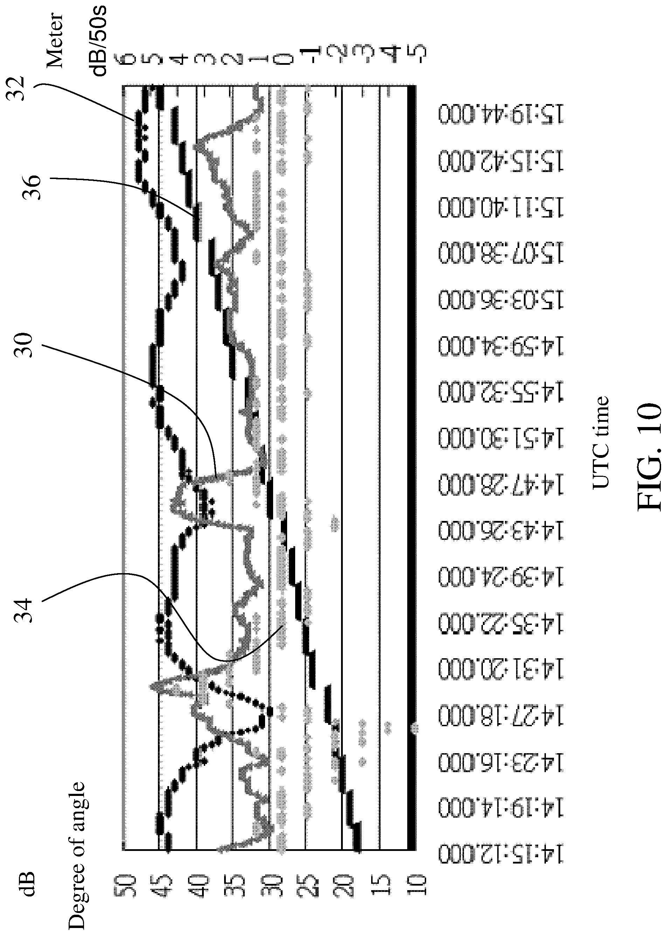

FIG. 10 is a schematic view of a signal strength varied rate, an elevation angle, and a deviation according to an embodiment. FIG. 10 illustrates a signal strength curve 32, a signal strength varied rate curve 34, an elevation angle curve 36 of a satellite in use, and an incurred deviation curve 31. The deviation curve 31 corresponds to the right side of the vertical axis and the unit is meter. The signal strength curve 32 corresponds to the left side of the vertical axis and the unit is dB. The signal strength varied rate curve 34 corresponds to the right side of the vertical axis and the unit is the signal strength varied rate per fifty seconds (dB/50s). The elevation angle curve 36 corresponds to the right side of the vertical axis and the unit is angle in degree. It can be seen that when the elevation angle is smaller and the signal strength varied rate fluctuates dramatically, a larger deviation is incurred.

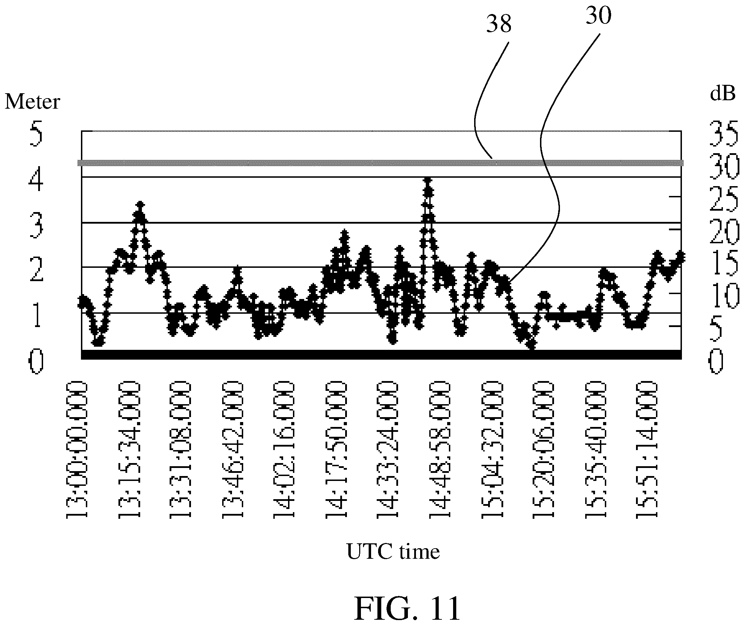

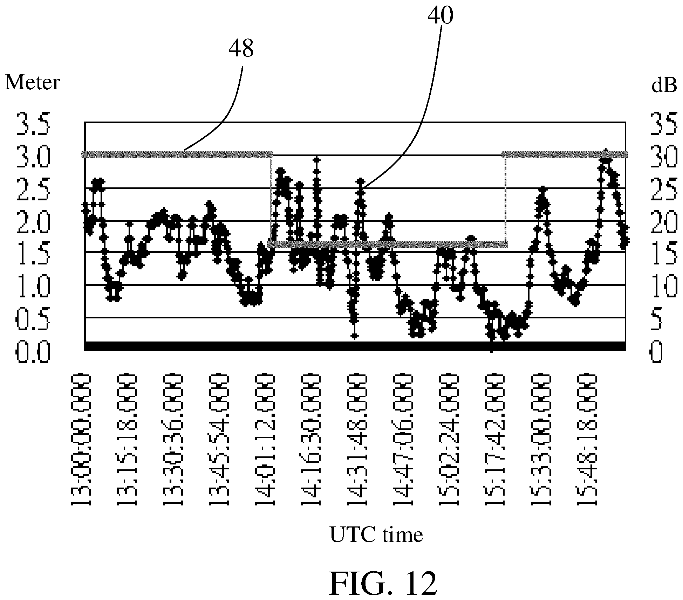

FIG. 11 is a schematic view of a fixed strength mask value and a deviation according to an embodiment. FIG. 12 is a schematic view of an adjusted strength mask value and a deviation according to an embodiment. In FIG. 11 and FIG. 12, the unit of the left side of the vertical axis is meter, and the unit of the right side of the vertical axis is decibel (dB). FIG. 11 and FIG. 12 individually illustrate a fixed strength mask value curve 38 and an adjusted strength mask value curve 48. In FIG. 11, the strength mask value is 30 dB and fixed, and the elevation angle mask value is 7.5 degree. In FIG. 12, the strength mask value is adjusted according to Step S400 to Step S500, and the elevation angle mask value is also 7.5 degree. It can be seen that the deviations in FIG. 11 can be up to 4 meters at most, and the average of the deviations is about 2 meters. However, the deviations in FIG. 12 are always within 3 meters, and the average of the deviations is about 1.5 meters only. It can be seen that after the second satellite is removed, better positioning accuracy can be achieved by the satellites in use 20 to perform positioning.

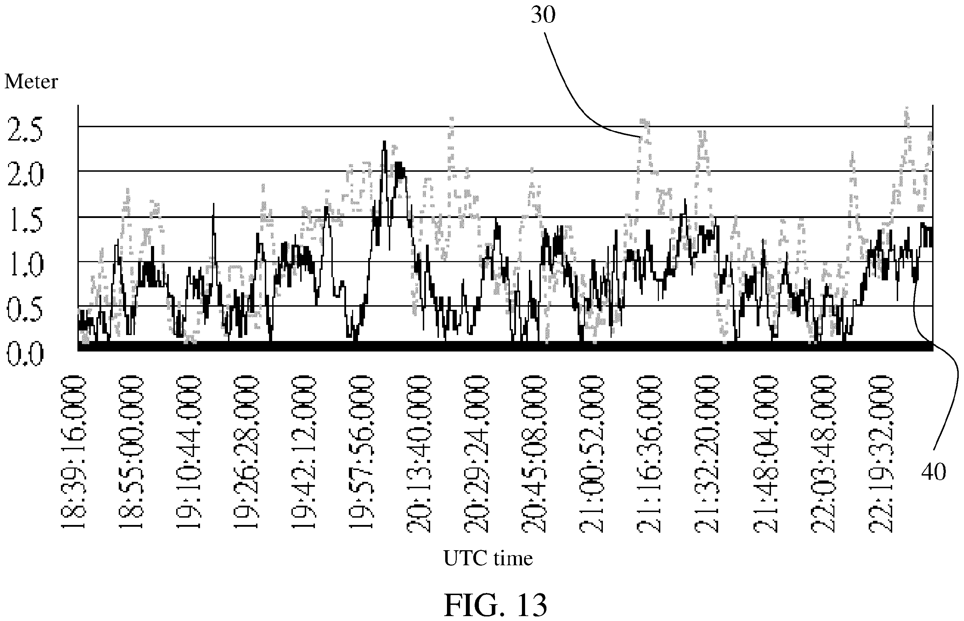

FIG. 13 is a schematic comparison view of deviations according to an embodiment. FIG. 13 illustrates the incurred deviation curve 31 when the original satellites in use 20 are used to perform positioning and an adjusted deviation curve 40 when the satellites in use 20 having the first satellite or the second satellite removed are used to perform positioning. It can be easily seen that the adjusted deviation curve 40 is substantially lower than the original deviation curve 31.

In view of the above content, according to the satellite-based positioning method, the first satellite that may incur the geometric error and the second satellite that may make the signal strength varied rate too large due to the problem of shelter can be found, and the satellites in use having the first satellite or/and the second satellite removed are used to perform positioning. Furthermore, the satellite-based positioning method only needs the basic satellite signals to perform the rapid and accurate positioning.

**Claims**

1. A satellite-based positioning method, applicable in a Global Positioning System (GPS) receiver (10), the satellite-based positioning method comprising:

   obtaining a plurality of satellites in use (20) by searching (Step 100), where some or all the satellites in-view (30) are chosen as the satellites in use (20);
   performing a preliminary satellite-based positioning, and obtaining a preliminary position of the location of the GPS receiver (10) obtained through preliminary calculation;
   calculating every satellite vector (22) between each of the satellites in use (20) and the GPS receiver (10);
   selecting three of the satellites in use (20) in sequence as a satellite candidate set,
   searching for one of the satellite candidate sets forming a geometric error relation according to the satellite vectors (22), and taking at least one of the satellites in use (20) in the satellite candidate set forming the geometric error relation as a first satellite;
   searching for at least one second satellite in the satellites in use (20), wherein a signal strength varied rate, being measured in decibel per second, of the second satellite is greater than a varied rate threshold; and
   using the satellites in use (20) having the first satellite or the second satellite removed to perform positioning of the location of the GPS receiver (10) based upon the remaining satellites in use (20).

2. The satellite-based positioning method according to claim 1, wherein the step of obtaining the satellites in use (20) by searching comprises:

   initializing the GPS receiver (10) and obtaining a plurality of satellites in-view (30), wherein the satellites in-view (30) comprise the satellites in use (20);
   receiving a satellite signal of each of the satellites in use (20) and the satellites in-view (30) in a plurality of directions respectively; and
   writing satellite information of each of the multiple satellites in use (20) and the satellites in-view (30) in a GPS detection table according to the satellite signals.

3. The satellite-based positioning method according to claim 2, wherein the satellite information comprises a signal strength value, a satellite altitude value, an azimuth angle, an elevation angle, a correction orientation, and a correction signal strength of the satellite in use (20) or the satellite in-view (30), and the correction orientation or the correction signal strength is used for searching for the first satellite or the second satellite.

4. The satellite-based positioning method according to claim 1, wherein the step of selecting three of the satellites in use (20) in sequence as the satellite candidate set, searching for one of the satellite candidate sets forming the geometric error relation according to the satellite vectors (22), and using the at least one of the satellites in use (20) in the satellite candidate set forming the geometric error relation as the first satellite comprises:

   selecting three of the satellites in use (20) in sequence as the satellite candidate set;
   calculating three vectors between the satellites (24) of the satellite candidate set according to the satellite vectors (22) of the satellite candidate set;
   calculating three angles between the satellites of the satellite candidate set according to the vectors between the satellites (24) of the satellite candidate set; and
   when any one of the angles between the satellites (26) is smaller than an threshold angle, taking the satellite candidate set of which the angle between the satellites (26) is smaller than the threshold angle as the satellite candidate set forming the geometric error relation, and taking at least one of the satellites in use (20) of the satellite candidate set forming the geometric error relation as the first satellite. or
   when an azimuth angle $\theta j$ of any one of the other obtained satellites j in use of the satellite candidate set is smaller than $\theta i+\pi/2$ or is greater than or equal to $\theta i-\pi/2$, taking the satellite candidate set of which the satellite j in use has the azimuth angle $\theta j$ smaller than $\theta i+\pi/2$ or greater than or equal to $\theta i-\pi/2$ as the satellite candidate set forming the geometric error relation, and taking the satellite j in use having the azimuth angle $\theta j$ smaller than $\theta i+\pi/2$ or greater than or equal to $\theta i-\pi/2$ as the first satellite.

5. The satellite-based positioning method according to claim 1, wherein before the step of using the satellites in use (20) having the first satellite or the second satellite removed to perform positioning, the satellite-based positioning method further comprises:

   recording the satellite in use (20) having a lowest signal strength value and the satellite in use (20) having a smallest elevation angle.

6. The satellite-based positioning method according to claim 5, wherein the step of using the satellites in use (20) having the first satellite or the second satellite removed to perform positioning comprises:

   calculating a deviation of current positioning; and
   when the deviation of current positioning is greater than a deviation threshold, using the satellites in use (20) having the first satellite or the second satellite removed to perform positioning.

7. The satellite-based positioning method according to claim 5, wherein the step of using the satellites in use (20) having the first satellite or the second satellite removed to perform positioning comprises:

   adjusting at least one positioning parameter corresponding to the multiple satellites in use (20) in the GPS receiver (10) to remove the first satellite or the second satellite; and
   using the satellites in use (20) having the first satellite or the second satellite removed to perform positioning.

8. The satellite-based positioning method according to claim 7, wherein the positioning parameter comprises a strength mask value, and the step of adjusting the positioning parameter corresponding to the satellites in use (20) in the GPS receiver (10) to remove the first satellite or the second satellite comprises:

   when the first satellite or the second satellite is the satellite in use (20) having the lowest signal strength value, increasing the strength mask value to remove the satellite in use (20) having the lowest signal strength value or
   wherein the positioning parameter comprises an elevation angle mask value, and the step of adjusting the positioning parameter corresponding to the satellites in use (20) in the GPS receiver (10) to remove the first satellite or the second satellite comprises:

      when the first satellite or the second satellite is the satellite in use (20) having the smallest elevation angle, gradually increasing the elevation angle mask value at an elevation angle spacing, until the satellite in use (20) having the smallest elevation angle is removed and wherein the elevation angle spacing is 0.5 degree.

9. The satellite-based positioning method according to claim 1, wherein the step of using the satellites in use (20) having the first satellite or the second satellite removed to perform positioning comprises:

calculating a deviation of current positioning; and

when the deviation of current positioning is greater than a deviation threshold, using the satellites in use (20) having the first satellite or the second satellite removed to perform positioning.

10. The satellite-based positioning method according to claim 9, wherein when the deviation of current positioning is greater than a deviation of previous positioning and the deviation of current positioning is greater than the deviation threshold, the satellites in use (20) having the first satellite or the second satellite removed is used to perform the positioning, and the deviation of previous positioning and the deviation of current positioning are calculated by using a two-dimensional root-mean-square, 2DRMS, deviation or wherein when the deviation of current positioning is greater than a deviation of pre-estimated positioning and the deviation of current positioning is greater than the deviation threshold, the satellites in use (20) having the first satellite or the second satellite removed is used for perform positioning, and the deviation of pre-estimated positioning is calculated by the application of the Taylor expansion.

11. The satellite-based positioning method according to claim 1, wherein the step of using the satellites in use (20) having the first satellite or the second satellite removed to perform positioning comprises:

adjusting at least one positioning parameter corresponding to the satellites in use (20) in the GPS receiver to remove the first satellite or the second satellite; and

using the multiple satellites in use (20) having the first satellite or the second satellite removed to perform positioning.

12. The satellite-based positioning method according to claim 11, wherein the positioning parameter comprises a strength mask value, and the step of adjusting the positioning parameter corresponding to the satellites in use (20) in the GPS receiver (10) to remove the first satellite or the second satellite comprises:

increasing the strength mask value to remove the at least one first satellite or at least one second satellite or

wherein the positioning parameter comprises an elevation angle mask value, and the step of adjusting the positioning parameter corresponding to the satellites in use (20) in the GPS receiver (10) to remove the first satellite or the second satellite comprises:

gradually increasing the elevation angle mask value by an elevation angle spacing, until the at least one first satellite or the at least one second satellite is removed, and the elevation angle spacing is 0.5 degree.

13. The satellite-based positioning method according to claim 11, wherein the step of using the satellites in use (20) having the first satellite or the second satellite removed to perform positioning further comprises:

adjusting at least one of the positioning parameter to add at least one tracking satellite among the satellites in-view (30) as a satellite in use (20), and the step of using the satellites in use having the first satellite or the second satellite removed to perform positioning comprises using the satellites in use (20) having the first satellite or the second satellite removed and having the tracking satellite newly added to perform positioning ; and

setting a Wide Area Augmentation System, WAAS, parameter to be enabled.

14. The satellite-based positioning method according to claim 1, wherein before the step of using the satellites in use (20) having the first satellite or the second satellite removed to perform positioning, the method further comprises:

setting a Dilution of Precision, DOP, parameter to be enabled.

**Patentansprüche**

1. Satellitengestütztes Standortbestimmungsverfahren, das in einem Global-Positioning-System- (GPS-) Empfänger (10) anwendbar ist, wobei das satellitengestützte Standortbestimmungsverfahren umfasst:

Erhalten einer Vielzahl von verwendeten Satelliten (20) durch Suchen (Schritt 100), wobei einige oder alle Satelliten in Sicht (30) als verwendete Satelliten (20) ausgewählt werden;

Durchführen einer vorläufigen satellitengestützten Positionierung bzw. Standortbestimmung und Erhalten einer vorläufigen Positionierung des Ortes des GPS-Empfängers (10) durch die vorläufige Berechnung;

Berechnen jedes Satellitenvektors (22) zwischen jedem der verwendeten Satelliten (20) und dem GPS-Empfänger (10);

Auswählen von drei der verwendeten Satelliten (20) der Reihe nach als Satelliten-Kandidatensatz,

Suchen nach einem der Satelliten-Kandidatensätze, die eine geometrische Fehlerrelation in Abhängigkeit von den Satellitenvektoren (22) bilden, und Nehmen mindestens eines der Satelliten (20) im Satellitenkandidatensatz, der die geometrischen Fehlerbeziehung erfüllt zu einem ersten Satelliten,

Suchen nach mindestens einem zweiten Satelliten unter den verwendeten Satelliten (20), wobei eine Signalstärken-Änderungsrat, in Dezibel pro Sekunde gemessen, des zweiten Satelliten größer ist als ein Variationsraten-Schwellenwert; und

Benutzen der verwendeten Satelliten (20), bei denen der erste Satellit oder der zweite Satellit entfernt wurden, um die Positionsbestimmung des GPS-Empfängers (10) basierend auf den verbleibenden verwendeten Satelliten (20) auszuführen.

2. Satellitengestütztes Standortbestimmungsverfahren nach Anspruch 1, wobei der Schritt des Erhaltens der verwendeten Satelliten (20) durch Suchen umfasst:

Initialisieren des GPS-Empfängers (10) und Erhalten einer Vielzahl von Satelliten in-Sicht (30), wobei die Satelliten in-Sicht (30) die verwendeten Satelliten (20) umfassen;

Empfangen eines Satellitensignals von jedem der verwendeten Satelliten (20) und der Satelliten in Sicht (30) jeweils aus einer Vielzahl von Richtungen, und

Schreiben von Satelliteninformationen jedes der mehreren verwendeten Satelliten (20) und der Satelliten in-Sicht (30) in einer GPS-Erfassungstabelle gemäß den Satellitensignalen.

3. Satellitenbasiertes Standortbestimmungsverfahren nach Anspruch 2, wobei die Satelliteninformationen einen Signalstärkewert, einen Satellitenhöhenwert, einen Azimut-Winkel, einen Elevationswinkel, eine Korrekturorientierung und eine Korrektur der Signalstärke des in Gebrauch befindlichen Satelliten (20) oder des Satelliten in Sicht (30) umfassen, und die Korrekturorientierung oder die Korrektur der Signalstärke für die Suche nach dem ersten Satelliten oder dem zweiten Satelliten verwendet wird.

4. Satellitenbasiertes Standortbestimmungsverfahren nach Anspruch 1, bei dem der Schritt des Auswählens von drei in Gebrauch befindlichen, verwendeten Satelliten (20) der Reihe nach als Satellitenkandidatensatz, Suchen nach einem der Satellitenkandidatensätze, die die geometrische Fehlerrelation gemäß des Satelliten-Vektors (22) bilden, und Verwenden mindestens eines der in Gebrauch befindlichen Satelliten (20) innerhalb des Satellitenkandidatensatzes, der als der erste Satellit die geometrische Fehlerrelation bildet, umfasst:

Auswählen von drei der verwendeten Satelliten (20) der Reihe nach als der Satellitenkandidatensatz,

Berechnen von drei Vektoren zwischen den Satelliten (24) des Satellitenkandidatensatzes gemäß den Satellitenvektoren (22) des Satellitenkandidatensatzes;

Berechnen von drei Winkeln zwischen den Satelliten des Satellitenkandidatensatzes gemäß den Vektoren zwischen den Satelliten (24) des Satellitenkandidatensatzes; und

falls ein beliebiger Winkel der Winkel zwischen den Satelliten (26) kleiner als ein Schwellenwinkel ist, Nehmen des Satellitenkandidatensatzes, dessen Winkel zwischen den Satelliten (26) kleiner ist als der Schwellenwinkel als der Satellitenkandidatensatz, als Satellitenkandidatensatz, der die geometrische Fehlerrelation bildet, und Nehmen wenigstens eines der Satelliten in Gebrauch (20) des die geometrische Fehlerrelation bildenden Satellitenkandidatensatzes als den ersten Satelliten

oder

Verwenden des Satellitenkandidatensatzes, dessen Satellit j einen Azimutwinkel $\Theta_j$ kleiner als ($\Theta_i + n / 2$) oder größer als oder gleich ($\Theta_i - n /2$) ist, als Satellitenkandidatensatz, der die geometrische Fehlerrelation bildet, falls ein Azimut-Winkel $\Theta_j$ von irgendeinem der anderen verwendeten Satelliten j bei Verwendung des Satelliten-Kandidatensatzes kleiner ist als ($\Theta_i + n / 2$) oder größer oder gleich ($\Theta_i - n / 2$) ist, und Verwenden des Satelliten j im Gebrauch mit einem Azimutwinkel $\Theta_j$ kleiner als ($\Theta_i + n / 2$) oder größer als oder gleich ($\Theta_i - n / 2$) als erster Satellit.

5. Satellitenbasiertes Standortbestimmungsverfahren nach Anspruch 1, wobei vor dem Schritt des Verwendens der verwendeten Satelliten (20) mit dem Entfernen des ersten Satelliten oder des zweiten Satelliten die Positionierung durchgeführt wird, wobei das satellitenbasierte Standortbestimmungsverfahren ferner umfasst:

Aufzeichnen des Satelliten im Gebrauch (20) mit dem niedrigsten Signalstärkewert und des Satelliten (20) mit einem kleinsten Elevationswinkel.

6. Satellitengestütztes Standortbestimmungsverfahren nach Anspruch 5, bei dem der Schritt des Verwendens der verwendeten Satelliten (20) mit dem Entfernen des ersten Satelliten oder des zweiten Satelliten zum Durchführen der Standortbestimmung umfasst:

Berechnen einer Abweichung der aktuellen Positionierung und wenn die Abweichung der aktuellen Positionierung größer als ein Abweichungsschwellwert ist, Benutzen der verwendeten Satelliten (20) unter Entfernung des ersten Satelliten oder des zweiten Satelliten, um eine Standortbestimmung durchzuführen.

7. Satellitengestütztes Standortbestimmungsverfahren nach Anspruch 5, bei dem der Schritt des Verwendens der in Verwendung befindlichen Satelliten (20) mit dem Entfernen des ersten Satelliten oder des zweiten Satelliten zum Durchzuführen der Standortbestimmung umfasst:

Einstellen mindestens eines Positionierungsparameters entsprechend der Vielzahl der in Verwendung befindlichen Satelliten (20) im GPS-Empfänger (10), um den ersten Satelliten oder den zweiten Satelliten zu entfernen; und Verwenden der in Verwendung befindlichen Satelliten (20) unter Entfernung des ersten Satelliten oder des zweiten Satelliten von den verwendeten Satelliten (20) zum Durchzuführen der Standortbestimmung.

8. Satellitengestütztes Standortbestimmungsverfahren nach Anspruch 7, wobei der Standortbestimmungsparameter einen Festigkeitsmaskenwert umfasst, und der Schritt des Einstellens des Standortbestimmungsparameters entsprechend der in Gebrauch befindlichen Satelliten (20) im GPS-Empfänger (10) zum Entfernen des ersten Satelliten oder des zweiten Satelliten umfasst:

wenn der erste Satellit oder der zweite Satellit der verwendete Satellit (20) mit dem geringsten Signalstärkewert ist, Erhöhen des Festigkeitsmaskenwerts, um den Satelliten in Benutzung (20), der die geringste Signalstärke aufweist, zu entfernen, oder wobei der Positionierungsparameter einen Elevationswinkelmaskenwert und den Schritt des Einstellens des Positionierungsparameters, der den in Gebrauch befindlichen Satelliten (20) im GPS-Empfänger (10) entspricht, um den ersten Satelliten oder den zweiten Satelliten zu entfernen, umfasst:

wenn der erste Satellit oder der zweite Satellit der verwendete Satellit (20) mit dem kleinsten Höhenwinkel ist, ein allmähliches Erhöhen des Elevationswinkelmaskenwerts um einen Elevationswinkelabstand, bis der verwendete Satellit (20), der den kleinsten Höhenwinkel aufweist, entfernt wird und wobei der Elevationswinkelabstand 0,5 Grad entspricht.

9. Satellitengestütztes Standortbestimmungsverfahren nach Anspruch 1, wobei der Schritt des Verwendens der verwendeten Satelliten (20) mit dem Entfernen des ersten Satelliten oder des zweiten Satelliten zum Durchführen einer Standortbestimmung umfasst:

Berechnen einer Abweichung der aktuellen Positionierung und wenn die Abweichung der aktuellen Positionierung größer als eine Abweichungsschwelle ist, werden der erste Satellit oder der zweite Satellit aus den verwendeten Satelliten (20) entfernt, um die Standortbestimmung durchzuführen.

10. Satellitengestütztes Standortbestimmungsverfahren nach Anspruch 9, wobei, wenn die Abweichung der aktuellen Positionierung größer als eine Abweichung der vorherigen Positionierung ist und die Abweichung der gegenwärtigen Positionierung größer als die Abweichungsschwelle ist, der erste Satellit oder der zweite Satellit aus den verwendeten Satelliten (20) entfernt werden, um die Standortbestimmung durchzuführen, und

die Abweichung der vorherigen Position und die Abweichung der aktuellen Positionierung unter Verwendung einer zweidimensionalen mittleren quadratischen bzw. 2DRMS-Abweichung berechnet werden oder

wobei, wenn die Abweichung der aktuellen Positionierung größer als eine Abweichung der vorab geschätzten Positionierung ist und die Abweichung der aktuellen Positionierung größer als die Abweichungsschwelle ist, die verwendeten Satelliten (20) unter Entfernung des ersten Satelliten oder des zweiten entfernten Satelliten zum Ausführen der Standortbestimmung verwendet werden, und die Abweichung der vorausgeschätzten Positionierung durch die Anwendung einer Taylor-Entwicklung berechnet wird.

11. Satellitengestütztes Standortbestimmungsverfahren nach Anspruch 1, wobei der Schritt des Verwendens der verwendeten Satelliten (20) unter Entfernung des ersten Satelliten oder des zweiten Satelliten zum Durchführen einer Standortbestimmung umfasst:

Einstellen von mindestens einem Positionierungsparameter, der den verwendeten Satelliten (20) im GPS-Empfänger entspricht, um den ersten Satelliten oder den zweiten Satelliten zu entfernen, und

die mehreren verwendeten Satelliten (20) unter Entfernung des ersten Satelliten oder des zweiten Satelliten zum Durchführen einer Standortbestimmung verwendet werden.

12. Satellitengestütztes Standortbestimmungsverfahren nach Anspruch 11, wobei der Positionierungsparameter einen Stärkemaskenwert aufweist und der Schritt des Einstellens des Positionierungsparameters, der den verwendeten Satelliten (20) im GPS-Empfänger (10) entspricht, um den ersten Satelliten oder den zweiten Satelliten zu entfernen, umfasst:

Erhöhen des Stärkemaskenwertes zum Entfernen des mindestens einen ersten Satelliten oder mindestens eines zweiten Satelliten oder wobei der Positionierungsparameter einen Elevationswinkel-Maskenbereich umfasst, und der Schritt des Einstellens des Positionierungsparameters, der den im Einsatz befindlichen Satelliten (20) im GPS-Empfänger (10) entspricht, um den ersten Satelliten, oder der zweite Satellit zu entfernen,:

ein allmähliches Erhöhen des Elevationswinkelmaskenwerts um einen Elevationswinkelabstand umfasst, bis der mindestens eine erste Satellit oder der mindestens eine zweite Satellit entfernt ist, und der Elevationswinkelabstand 0,5 Grad beträgt.

13. Satellitengestütztes Standortbestimmungsverfahren nach Anspruch 11, wobei der Schritt des Verwendens der verwendeten Satelliten (20) unter Entfernung des ersten Satellit oder des zweite Satelliten zum Durchzuführen einer Standortbestimmung umfasst:

das Einstellen von mindestens einem Positionierungsparameter zum Zufügen mindestens einen Nachführsatelliten unter den in Sicht befindlichen Satelliten (30) als verwendeten Satellit (20), und den Schritt des Verwendens der verwendeten Satelliten unter Entfernung des ersten Satellit oder des zweite Satelliten zum Durchzuführen einer Standortbestimmung, das Verwenden der verwendeten Satelliten (20) unter Entfernung des ersten Satellit oder des zweite Satelliten und mit dem neu hinzugefügten Nachführsatelliten, und die Einstellung eines zu aktivierenden WAA-Parameters.

14. Satellitengestütztes Standortbestimmungsverfahren nach Anspruch 1, wobei vor dem Schritt des Verwendens der verwendeten Satelliten (20) unter Entfernung des ersten Satellit oder des zweite Satelliten zum Durchzuführen einer Standortbestimmung das Verfahren weiter umfasst:

eine Aktivierung einer Abschwächung der Genauigkeit in Form eines DOP Parameters.

**Revendications**

1. Procédé de localisation assisté par satellite applicable dans un récepteur (10) d'un système mondial de positionnement (GPS), le procédé de localisation assisté par satellite consistant à :

obtenir une multitude de satellites utilisés (20) en les cherchant (étape 100), quelques-uns ou tous les satellites en vue (30) étant choisis comme satellites utilisés (20) ; effectuer un positionnement ou une localisation préliminaire assisté(e) par satellite et obtenir un positionnement préliminaire de l'endroit du récepteur GPS (10) en calculant préliminairement ; calculer chaque vecteur de satellite (22) entre chacun des satellites utilisés (20) et le récepteur GPS (10) ; choisir successivement trois parmi les satellites utilisés (20) à titre d'ensemble de candidats de satellites, chercher un des ensembles de candidats de satellite qui constituent une relation d'erreur géométrique en fonction des vecteurs de satellite (22), et prendre au moins un des satellites (20) dans l'ensemble de candidats de satellite qui remplit la relation d'erreur géométrique par rapport à un premier satellite, chercher au moins un second satellite parmi les satellites utilisés (20), un taux de variation de l'intensité de signal, mesuré en décibel par seconde, du second satellite est plus grand qu'une valeur seuil du taux de variation ; et se servir des satellites utilisés (20) dans lesquels le premier satellite ou le second satellite a été enlevé, en vue de mettre en oeuvre la localisation du récepteur GPS (10) en se basant sur les satellites utilisés restants (20).

2. Procédé de localisation assisté par satellite selon la revendication 1, dans lequel l'étape d'obtenir les satellites utilisés (20) en les cherchant consiste à :

initialiser le récepteur GPS (10) et obtenir une multitude de satellites en vue (30), les satellites en vue (30) comprenant les satellites utilisés (20) ; recevoir un signal satellite de chacun des satellites utilisés (20) et des satellites en vue (30) respectivement depuis une multitude de directions, et

écrire des informations satellites de chacun parmi les plusieurs satellites utilisés (20) et des satellites en vue (30) dans un tableau de saisie GPS selon les signaux satellites.

**3.** Procédé de localisation assisté par satellite selon la revendication 2, dans lequel les informations satellites comprennent une valeur d'intensité de signal, une valeur d'altitude de satellite, un angle azimutal, un angle d'élévation, une orientation de correction et une correction de l'intensité de signal du satellite en service (20) ou du satellite en vue (30), et l'orientation de correction ou la correction de l'intensité de signal est utilisée pour chercher le premier satellite ou le second satellite.

**4.** Procédé de localisation assisté par satellite selon la revendication 1, dans lequel l'étape consistant à choisir successivement trois satellites utilisés (20) en service à titre d'ensemble de candidats de satellite, à chercher l'un des ensembles de candidats de satellite qui constituent la relation d'erreur géométrique selon le vecteur de satellite (22), et à utiliser au moins l'un des satellites en service (20) à l'intérieur de l'ensemble de candidats de satellite qui constitue la relation d'erreur géométrique en tant que premier satellite, comprend les étapes consistant à :

choisir successivement trois parmi les satellites utilisés (20) à titre d'ensemble de candidats de satellite,

calculer trois vecteurs entre les satellites (24) de l'ensemble de candidats de satellite selon les vecteurs de satellite (22) de l'ensemble de candidats de satellite ;

calculer trois angles entre les satellites de l'ensemble de candidats de satellite selon les vecteurs entre les satellites (24) de l'ensemble de candidats de satellite ; et

au cas où un angle quelconque parmi les angles entre les satellites (26) est inférieur à un angle seuil, prendre l'ensemble de candidats de satellite dont l'angle entre les satellites (26) est inférieur à l'angle seuil de l'ensemble de candidats de satellite, à titre d'ensemble de candidats de satellite qui constitue la relation d'erreur géométrique, et prendre à titre de premier satellite au moins l'un des satellites en service (20) de l'ensemble de candidats de satellite constituant la relation d'erreur géométrique, ou

utiliser l'ensemble de candidats de satellite dont le satellite j présente un angle azimutal $\Theta j$ inférieur à $(\Theta i + \pi/2)$ ou supérieur ou égal à $(\Theta i - \pi/2)$ à titre d'ensemble de candidats de satellite qui constitue la relation d'erreur géométrique si, lors de l'utilisation de l'ensemble de candidats de satellite, un angle azimutal $\Theta j$ d'un satellite

quelconque parmi les autres satellites utilisés j est inférieur à $(\Theta i + \pi/2)$ ou supérieur ou égal à $(\Theta i - \pi/2)$,

et utiliser le satellite j en service avec un angle azimutal $\Theta j$ inférieur à $(\Theta i + \pi/2)$ ou supérieur ou égal à $(\Theta i - \pi/2)$, à titre de premier satellite.

**5.** Procédé de localisation assisté par satellite selon la revendication 1, dans lequel, avant l'étape consistant à utiliser un satellite utilisé (20), on met en oeuvre le positionnement en enlevant le premier satellite ou le second satellite, et le procédé de localisation assisté par satellite comprend en outre l'étape consistant à :

enregistrer le satellite en service (20) avec la valeur d'intensité de signal la plus faible et le satellite (20) avec l'angle d'élévation le plus petit.

**6.** Procédé de localisation assisté par satellite selon la revendication 5, dans lequel l'étape consistant à utiliser les satellites utilisés (20) en enlevant le premier satellite ou le second satellite afin de mettre en oeuvre la localisation comprend l'étape consistant à :

calculer une déviation du positionnement actuel et, lorsque la déviation du positionnement actuel est supérieure à une valeur seuil de déviation, utiliser les satellites utilisés (20) en enlevant le premier satellite ou le second satellite, afin de mettre en oeuvre une localisation.

**7.** Procédé de localisation assisté par satellite selon la revendication 5, dans lequel l'étape consistant à utiliser les satellites en service (20) en enlevant le premier satellite ou le second satellite afin de en mettre en oeuvre la localisation consiste à :

régler au moins un paramètre de positionnement en correspondance de la multitude de satellites en service (20) dans le récepteur GPS (10), afin d'enlever le premier ou le second satellite ; et

utiliser les satellites en service (20) en enlevant le premier satellite ou le second satellite parmi les satellites utilisés (20) afin de mettre en oeuvre la localisation.

**8.** Procédé de localisation assisté par satellite selon la revendication 7, dans lequel le paramètre de localisation comprend une valeur de masque de solidité, et l'étape consistant à régler le paramètre de localisation en correspondance des satellites en service (20) dans le récepteur GPS (10) pour enlever le premier satellite ou le second satellite consiste à :

le premier satellite ou le second satellite étant le satellite utilisé (20) avec la valeur d'intensité de signal la plus faible, à augmenter la valeur de masque de solidité pour enlever le satellite en service (20) qui présente la plus faible intensité de signal, ou

le paramètre de positionnement présentant une valeur de masque de l'angle d'élévation et l'étape consistant à régler le paramètre de positionnement qui correspond aux satellites en service (20) dans le récepteur GPS (10) afin d'enlever le premier satellite ou le second satellite, consiste à :

le premier satellite ou le second satellite étant le satellite utilisé (20) avec le plus petit angle d'altitude, augmenter progressivement la valeur de masque d'angle d'élévation d'une distance angulaire d'élévation jusqu'à ce que le satellite utilisé (20) qui présente le plus petit angle d'altitude soit enlevé, la distance angulaire d'élévation correspondant à 0,5 degré.

**9.** Procédé de localisation assisté par satellite selon la revendication 1, dans lequel l'étape consistant à utiliser les satellites utilisés (20) en enlevant le premier satellite ou le second satellite afin de en mettre en oeuvre la localisation consiste à :

calculer une déviation du positionnement actuel et, lorsque la déviation du positionnement actuel est supérieure à un seuil de déviation, à enlever le premier satellite ou le second satellite parmi les satellites utilisés (20) afin de mettre en oeuvre la localisation.

**10.** Procédé de localisation assisté par satellite selon la revendication 9, dans lequel, lorsque la déviation du positionnement actuel est supérieure à une déviation du positionnement précédent, et que la déviation du positionnement présent est supérieure au seuil de déviation, on enlève le premier satellite ou le second satellite parmi les satellites utilisés (20) afin de mettre en oeuvre la localisation, et on calcule la déviation de la position précédente et la déviation du positionnement actuel en utilisant une déviation bidimensionnelle moyenne carrée ou 2DRMS, ou

dans lequel, lorsque la déviation du positionnement actuel est supérieure à une déviation du positionnement estimé préalablement et que la déviation du positionnement actuel est supérieure au seuil de déviation, on utilise les satellites utilisés (20) en enlevant le premier satellite ou le second satellite enlevé, afin de mettre en oeuvre la localisation, et on calcule la déviation du positionnement estimé préalablement en appliquant un développement de Taylor.

**11.** Procédé de localisation assisté par satellite selon la revendication 1, dans lequel l'étape consistant à utiliser les satellites utilisés (20) en enlevant le premier satellite ou le second satellite afin de mettre en oeuvre la localisation consiste à :

régler au moins un paramètre de positionnement qui correspond aux satellites utilisés (20) dans le récepteur GPS, afin d'enlever le premier satellite ou le second satellite ; et utiliser les plusieurs satellites utilisés (20) en enlevant le premier satellite ou le second satellite afin de mettre en oeuvre la localisation.

**12.** Procédé de localisation assisté par satellite selon la revendication 11, dans lequel le paramètre de localisation comprend une valeur de masque d'intensité, et l'étape consistant à régler le paramètre de positionnement qui correspond aux satellites utilisés (20) dans le récepteur GPS (10), afin d'enlever le premier satellite ou le second satellite, consiste à :

augmenter la valeur de masque d'intensité afin d'enlever ledit au moins un premier satellite ou ledit au moins un second satellite, ou

dans lequel le paramètre de positionnement présente une zone de masque de l'angle d'élévation, et l'étape consistant à régler le paramètre de positionnement qui correspond aux satellites en service (20) dans le récepteur GPS (10) afin d'enlever le premier satellite ou le second satellite, consiste à :

augmenter progressivement la valeur de masque de l'angle d'élévation d'une distance angulaire d'élévation jusqu'à ce que ledit au moins un premier satellite ou ledit au moins un second satellite soit enlevé et que la distance angulaire d'élévation soit de 0,5 degré.

**13.** Procédé de localisation assisté par satellite selon la revendication 11, dans lequel l'étape consistant à utiliser les satellites utilisés (20) en enlevant le premier satellite ou le second satellite afin de mettre en oeuvre la localisation consiste à :

régler au moins un paramètre de positionnement pour ajouter au moins un satellite suiveur parmi les satellites en vue (30), à titre de satellite utilisé (20), et

l'étape consistant à utiliser les satellites utilisés en enlevant le premier satellite ou le second satellite afin de mettre en oeuvre la localisation, à utiliser les satellites utilisés (20) en enlevant le premier satellite ou le second satellite, et avec le satellite suiveur nouvellement ajouté, et à régler un paramètre WAA à activer.

**14.** Procédé de localisation assisté par satellite selon la revendication 1, dans lequel, avant l'étape consistant à utiliser les satellites utilisés (20), en enlevant le premier satellite ou le second satellite afin de mettre en oeuvre une localisation, le procédé consiste en outre à :

activer une atténuation de la précision sous la forme d'un paramètre DOP.

Initialize the GPS receiver and obtain multiple satellites in-view — S110

Receive a satellite signal of each of the satellites in use and the satellites in-view in multiple directions individually — S120

Write satellite information of each of the satellites in use and the satellites in-view into a GPS detection table according to the satellite signals — S130

FIG. 2

Obtain multiple satellites in use by searching — S100

Calculate every satellite vector between each of the satellites in use and the GPS receiver — S200

Select three of the satellites in use in sequence as a satellite candidate set, search for one of the satellite candidates set forming a geometric error relation according to the satellite vectors, and use at least one of the satellites in use in the satellite candidate set forming the geometric error relation as a first satellite — S300

Search for at least one second satellite in the satellites in use, where a signal strength varied rate of the second satellite is greater than a varied rate threshold — S400

Use the satellites in use having the first satellite or the second satellite removed to perform positioning — S500

FIG. 1

FIG. 3

FIG. 4

EP 2 560 024 B1

Calculate a deviation of current positioning

S510

Determine whether the deviation of current positioning is greater than a deviation threshold

No

S520

Yes

Use the satellites in use having the first satellite or the second satellite removed to perform positioning

S530

Use the current satellites in use to perform positioning

S540

FIG. 5

Adjust at least one positioning parameter corresponding to the satellites in use in the GPS receiver, so as to remove the first satellite or the second satellite

S525

Use the satellites in use having the first satellite or the second satellite removed to perform positioning

S530

FIG. 6

Obtain multiple satellites in use by searching

S100

Calculate every satellite vector between each of the satellites in use and the GPS receiver

S200

Record the satellite in use having the lowest signal strength value and the satellite in use having the smallest elevation angle

S600

Select three of the satellites in use in sequence as a satellite candidate set, search for one of the satellite candidate set forming a geometric error relation according to the multiple satellite vectors, and use at least one of the satellites in use in the satellite candidate set forming the geometric error relation as a first satellite

S300

Search for at least one second satellite in the satellites in use, where a signal strength varied rate of the second satellite is greater than a varied rate threshold

S400

Set a WAAS to be enabled

S700

Set a DOP to be enabled

S800

Calculate a deviation of current positioning

S510

Determine whether the deviation of current positioning is greater than a deviation threshold

No

Yes

S520

Adjust at least one positioning parameter corresponding to the satellites in use in the GPS receiver, so as to remove the first satellite or the second satellite

S525

Use the satellites in use having the first satellite or the second satellite removed to perform positioning

S530

Use the current satellites in use to perform positioning

S540

FIG. 7

EP 2 560 024 B1

FIG. 8

EP 2 560 024 B1

FIG. 9

FIG. 10

FIG. 11

FIG. 12

FIG. 13

EP 2 560 024 B1